# EUROPEAN PATENT APPLICATION

(11) **EP 4 772 292 A1**
(43) Date of publication of application: **08.07.2026**
(21) Application number: 25745426.4
(22) Date of filing: 08.01.2025
(51) Int. Cl.: B21D 51/26, B21D 51/46, B21D 51/10, H01M 50/224, H01M 50/202

(54) **ROTARY CAN BEADING APPARATUS**

(30) Priority: 26.01.2024 KR 20240012512
(71) Applicant: LG Energy Solution, Ltd., Seoul 07335 (KR)
(72) Inventor: KIM, Taeheon, Daejeon 34122 (KR); CHO, Haeyoun, Daejeon 34122 (KR); SHIM, Kyuhun, Daejeon 34122 (KR); LEE, Junyoung, Daejeon 34122 (KR); KIM, Daehyun, Daejeon 34122 (KR)
(74) Representative: Goddar, Heinz J.
(86) International application number: PCT/KR2025/000427
(87) International publication number: WO 2025/159407

(57) **Abstract**

A rotary can beading apparatus capable of preventing processing errors caused by thermal expansion of a shaft by smooth cooling of a spindle shaft rotating at high speed is provided. The spindle of the rotary can beading apparatus includes: a case provided with a first hollow portion extending axially; a housing accommodated in the first hollow portion to be rotatable with respect to the case, the housing provided with a second hollow portion extending axially and having a smaller diameter than the case; and a shaft axially slidable with respect to the housing while being rotatably constrained to the housing. The housing is provided with a plurality of fan blades extending in vertical direction, protruding radially outward from an outer circumferential surface thereof the housing and spaced apart from one another along the circumferential direction,

## Description

### [TECHNICAL FIELD]

This application claims the benefit of priority based on Korean Patent Application No. 10-2024-0012512 filed on January 26, 2024, and entire content disclosed in the document of the patent applications is included as a part of this specification.

The present invention relates to a can beading apparatus, and more particularly, to a rotary type can beading apparatus capable of preventing processing errors caused by thermal expansion of a spindle shaft rotating at high speed by smoothly cooling the spindle shaft.

### [BACKGROUND ART]

The rotary can beading apparatus is a device that forms a bead at a sidewall member around the open end of a cylindrical can while the can rotates around the rotary. The bead is formed after accommodating an electrode assembly in the can to fix the electrode assembly accommodated in the can.

Recently, as the size of cylindrical batteries is increased, the thickness of the can is also increased, and the depth of beading is also increased. Accordingly, the processing load is greatly increased during the beading process, and the processing time is also increased.

As the processing load and the processing time are increased, various problems occur in the conventional rotary can beading apparatus. Among the problems, the biggest problem is that a lot of heat is generated due to the load in axial direction and rotational load applied to the spindle such that excessive thermal expansion of the spindle shaft resulting in the difference in the height of the head from the set height, thereby expanding the dimensional deviation of the molded product.

Therefore, a structure capable of minimizing thermal expansion of the spindle shaft even in a high-load and long-term use environment is necessary.

### [DISCLOSURE]

### [TECHNICAL PROBLEM]

In order to solve above-described problems, it is an object of the present invention to provide a rotary beading apparatus capable of minimizing dimensional deviation of a processed product due to thermal expansion of the spindle shaft in a rotary beading molding process.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

The present invention may be applied to a rotary can beading apparatus including: a rotary rotating about a center axis; a plurality of arms arranged along a circumference of the rotary and extending in a radial direction, the plurality of arms rotating with the rotary; a head rotatably installed about a rotary axis at each of the plurality of arms and slidable in axial direction; a first rail cam having a first height profile extending in circumferential direction with respect to the center axis; and a first cam follower moving up and down together with the head and following the first height profile to adjust the height of the head.

The rotary can beading apparatus may further include: a plurality of can tables arranged along the circumference of the rotary so as to rotate together with the rotary and extending in radial direction; a can support provided at an outer circumference of each of the plurality of can tables so as to rotate together with the plurality of can tables and installed rotatably about the rotary axis with respect to the plurality of can tables; a second rail cam having a second height profile extending in circumferential direction with respect to the center axis; and a second cam follower moving up and down together with the can support and following the second height profile to adjust the height of the can support.

The rotary can beading apparatus may further include: a beading knife installed at each of the plurality of arms so as to be movable toward or away from the rotary axis; a third rail cam having a first radial direction profile extending in circumferential direction with respect to the center axis; and a third cam follower moving in radial direction with respect to the rotary axis together with the beading knife and following the first radial direction profile to adjust a radial distance of the beading knife with respect to the rotary axis of the head.

The rotary can beading apparatus may further include: a support roller disposed opposite the beading knife with the rotary axis interposed therebetween; a fourth rail cam having a second radial direction profile extending in circumferential direction with respect to the center axis; and a fourth cam follower moving in radial direction with respect to the rotary axis together with the support roller and following the second radial direction profile to adjust a radial distance of the support roller with respect to the rotary axis of the head.

The rotary can beading apparatus may include a first rail extending in circumferential direction with respect to the center axis, and a first roller moving up and down together with the head and following the first rail.

The height of the head in a first circumferential section may be determined by the first rail cam.

The height of the head in a second circumferential section that does not overlap with the first circumferential section may be determined by the first rail.

The rotary can beading apparatus may include a second rail extending in circumferential direction with respect to the center axis, and a second roller moving up and down together with the can support and following the second rail.

The height of the can table in a third circumferential section may be determined by the second rail cam. The height of the can table in a fourth circumferential section that does not overlap with the third circumferential section may be determined by the first rail.

A spindle may be rotatably installed about a rotary axis at each of the plurality of arms.

The spindle includes a case provided with a first hollow portion extending axially. The case may be fixed to the arm.

The spindle includes a housing accommodated in the first hollow portion to be rotatable with respect to the case wherein the housing is provided with a second hollow portion extending axially and having a smaller diameter than the case.

The spindle includes a shaft extending axially across the second hollow portion to be axially slidable with respect to the housing and having an axial end connected to the head.

The head may rotate by receiving a rotational force from the spindle, and move in an axial direction by the shaft.

A bearing may be interposed between the case and the housing and support a rotation of the housing with respect to the case.

The bearing may be arranged between the case and the housing in radial direction.

The bearing may be accommodated in the first hollow portion with the outer circumference thereof in contact with the inner circumference of the case and the inner circumference thereof in contact with the outer circumference of the housing.

A plurality of bearings may be arranged to be axially spaced apart from each other.

In order to solve above-described problems, the present invention provides a plurality of fan blades protruding radially outward from the outer circumferential surface of the housing, extending vertically, and spaced apart along the circumferential direction.

The fan blades are disposed in the first hollow portion with the housing accommodated in the case.

The surfaces of the fan blades may have a normal line directed toward the circumferential direction.

The fan blades may be arranged between two adjacent bearings in an axial direction.

In order to solve above-described problems, the present invention provides a cooling structure wherein a through-hole is provided in the case so as to communicate with a space of the first hollow portion which is outside the housing, and gas in the first hollow portion is suctioned to the outside through the through-hole or external air is supplied to the first hollow portion through the through-hole.

The through-hole may be provided in the between two bearings adjacent in the axial direction.

In order to solve above-described problems, the present invention provides a structure in which a shaft hole extending along the axial direction from the center of the shaft penetrates the shaft in axial direction, and gas is forced to flow through the shaft hole.

The structure of the forced flow of the gas may be embodied by providing a chamber communicated to the shaft hole at a shaft support member rotatably supporting the second axial end of the shaft, and providing a suction hole in the shaft support member to communicate with the chamber.

The gas in the chamber may be suctioned out of or external air is supplied into the chamber through the suction hole

In order to solve above-described problems, the present invention provides a temperature sensor capable of measuring the temperature of the shaft.

The temperature sensor may be installed in the first hollow portion outside the housing.

The cooling control may be performed based on the temperature measured by the temperature sensor.

When the temperature measured by the temperature sensor is equal to or higher than the reference temperature, stronger cooling operation of the shaft may be performed.

Two or more examples described above may be selectively combined.

For example, the fan blades are installed in the housing, and a through-hole communicating with a space in the first hollow portion where the fan blade is disposed may be provided in the case.

For example, when the temperature measured by the temperature sensor is equal to or higher than the reference temperature, the suction or supply pressure applied to the suction hole may be increased.

For example, when the temperature measured by the temperature sensor is equal to or higher than the reference temperature, the suction or supply pressure passing through the through-hole may be increased.

### [ADVANTAGEOUS EFFECTS]

According to the present invention, thermal expansion of the spindle shaft of the rotary can beading apparatus may be suppressed, thereby minimizing processing quality deviation and improving quality.

In addition to the advantageous effects described above, specific effects of the present invention will be described further while describing specific details of the present invention.

### [BRIEF DESCRIPTION OF DRAWINGS]

FIGS. 1 and 2 are a perspective view as viewed from above and a front view of the rotary can beading apparatus, respectively, according to an embodiment of the present invention.
FIG. 3 is a perspective view of the rotary can beading apparatus of FIG. 1 without an upper frame as viewed from above.
FIG. 4 is a perspective view of an upper frame of the rotary can beading apparatus of FIG. 1 as viewed from below.
FIG. 5 is a perspective view of the rotary can beading apparatus of FIG. 1 without a lower frame as viewed from below.
FIG. 6 is a perspective view of a lower frame of the rotary can beading apparatus of FIG. 1 as viewed from above.
FIG. 7 is a perspective view of a lower frame and a rotary of the rotary can beading apparatus of FIG. 1 as viewed from above.
FIG. 8 is a front cross-sectional view of an upper frame, a lower frame and a rotary.
FIG. 9 is a front cross-sectional view of the rotary can beading apparatus with a can supplied thereto.
FIG. 10 is a front cross-sectional view of the rotary can beading apparatus with a can being subjected to a beading process.
FIG. 11 is an enlarged cross-sectional view of a head, a knife and a support roller of the rotary can beading apparatus according to the embodiment of the present invention.
FIG. 12 is a cross-sectional perspective view of a spindle.
FIG. 13 is a cross-sectional perspective view of the spindle of FIG. 12 without a shaft thereof.
FIG. 14 is an exploded perspective view of a spindle.
FIG. 15 is a lateral cross-sectional view of a spindle.
FIGS. 16 and 17 are a cross-sectional perspective view and a perspective view of the upper and lower portions of a spindle with a shaft support member and a head installed thereon, respectively.
FIG. 18 is an enlarged cross-sectional view of a specific portion of the shaft support member of FIG. 16.

**[DESCRIPTION OF REFERENCE NUMERALS]**

| | | | |
|---|---|---|---|
| 1: | rotary can beading apparatus | 2: | can |
| 10: | rotary | 101: | center axis |
| 12: | outer rotary | 121: | table lifting guide |
| 14: | inner rotary | 141: | spindle drive support |
| 143: | spindle drive | 145: | drive motor |
| 147: | drive gear | 16: | support rotary |
| 17: | knife rail cam (third rail cam) | 172: | knife radial position profile |
| 20: | arm | 21: | spindle support |
| 22: | bearing | 23: | shaft lifting guide |
| 24: | shaft support member | 242: | chamber |
| 243: | suction hole | 30: | spindle |
| 300: | case | 302: | first hollow portion |
| 307: | through-hole | 301: | rotary axis |
| 31: | housing | 310: | second hollow portion |
| 313: | fan blade | 32: | driven gear |
| 33: | sleeve | 34: | shaft |
| 341: | shaft hole | 35: | head cam follower (first cam follower) |
| 37: | head | 38: | temperature sensor |
| 39: | head roller (first roller) | 40: | beading knife |
| 41: | knife support | 42: | knife support axis |
| 43: | knife cam follower (third cam follower) | 50: | support roller |
| 51: | roller support | 52: | roller support axis |
| 53: | support cam follower (fourth cam follower) | 60: | can table |
| 61: | can support | 62: | can cam follower (second cam follower) |
| 63: | can roller (second roller) | 70: | upper frame (first frame) |
| 71: | upper rail cam (first rail cam) | 77: | upper rail (first rail) |
| 80: | lower frame (second frame) | 81: | lower rail cam (second rail cam) |
| 85: | lower rail (second rail) | 86: | middle table |
| 87: | support rail cam (fourth rail cam) | 871: | support roller radial position profile |

### [DETAILED DESCRIPTION OF THE INVENTION]

Hereinafter, preferred embodiments of the present invention will be described with reference to the accompanying drawings.

The present invention is not limited to the embodiments disclosed hereinafter, and various changes may be applied and may be implemented in various different forms. The embodiment herein is only provided to complete the disclosure of the present invention and to fully inform those skilled in the art of the scope of the invention. Therefore, the present invention is not limited to the embodiments disclosed hereinafter, and it should be understood that the present invention includes all changes and equivalents encompassed in the technical spirit and scope of the present invention as well as substitution or addition of a configuration of one embodiment with that of another embodiment.

The accompanying drawings are only for facilitating understanding of the embodiments disclosed herein, and it should be understood that the technical idea disclosed herein is not limited by the accompanying drawings, and that encompasses all changes, equivalents and substitutions of the spirit and technical scope of the present invention. In the accompanying drawings, while components may be exaggeratedly large or small in size or thickness to facilitate understanding, etc., this should not construe the scope of protection of the present invention as being limited.

Terms used herein are only used to describe specific embodiments or examples, and are not intended to limit the present invention. In addition, the expressions in singular form include expressions in plural form unless the context clearly dictates otherwise. Herein, terms such as "comprise" and "consist of" are intended to designate that features, numbers, steps, operations, components, parts, or combinations thereof described in the specification exist. That is, it should be understood that terms such as "comprise", "consist of" used herein should not preclude the possibility of the presence or addition of one or more other features, numbers, steps, operations, components, parts, or combinations thereof.

While terms including ordinal numbers such as "first" and "second" may be used to describe various components, the components are not limited by the terms. The terms are only used for the purpose of distinguishing one component from another.

It should be understood that when an element is referred to as being "connected" to another element, the element may be directly connected to another element, or there may exist an interposing element in the middle. On the other hand, when an element is referred to as being "directly connected" to another element, it should be understood that there is no interposing element in the middle.

When an element is referred to as being "above" or "under" another element, it should be understood that there may exist an interposing elements in the middle as well as being directly above or under another element.

Unless defined otherwise, all terms used herein, including technical or scientific terms, have the same meaning as commonly understood by those skilled in the art to which the present invention belongs. Terms such as those defined in commonly used dictionaries should be interpreted as having a meaning consistent with the meaning in the context of the related art, and unless explicitly defined herein, terms such as those defined in commonly used dictionaries should not be interpreted in an ideal or excessively formal meaning.

Hereinafter, a rotary can beading apparatus 1 according to an embodiment of the present invention will be described.

In order to facilitate description, a center axis 101 is the center of rotation of the rotary 10, and a rotary axis 301 is the center of rotation of the head 37 orbiting around the rotary 10.

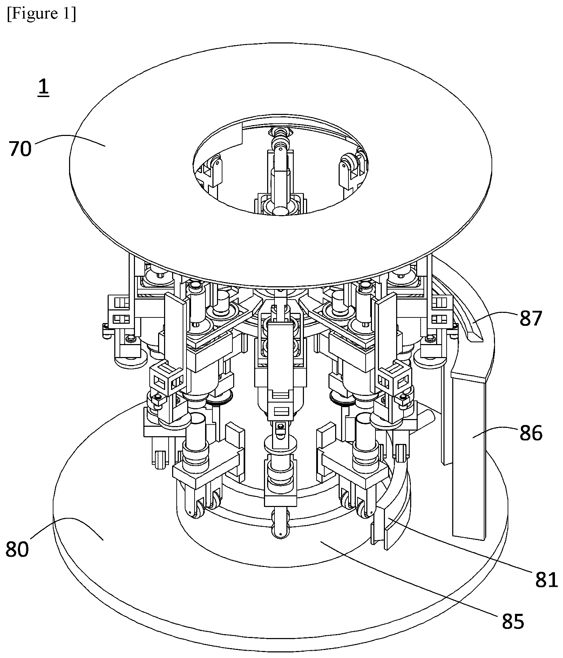

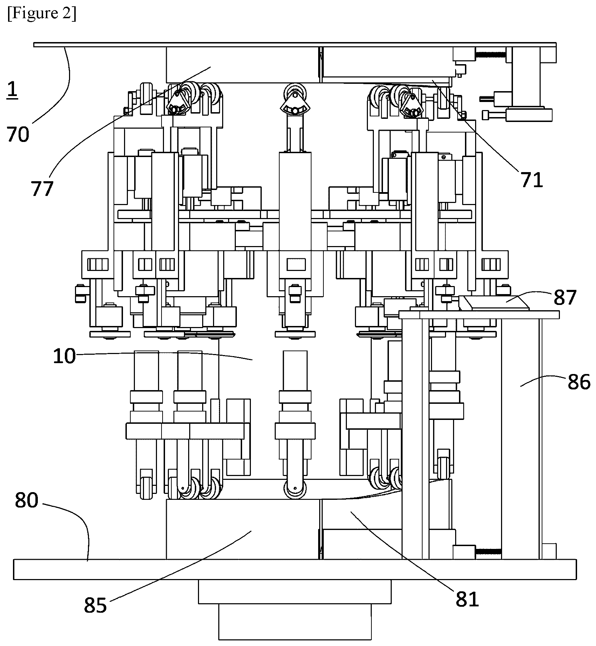

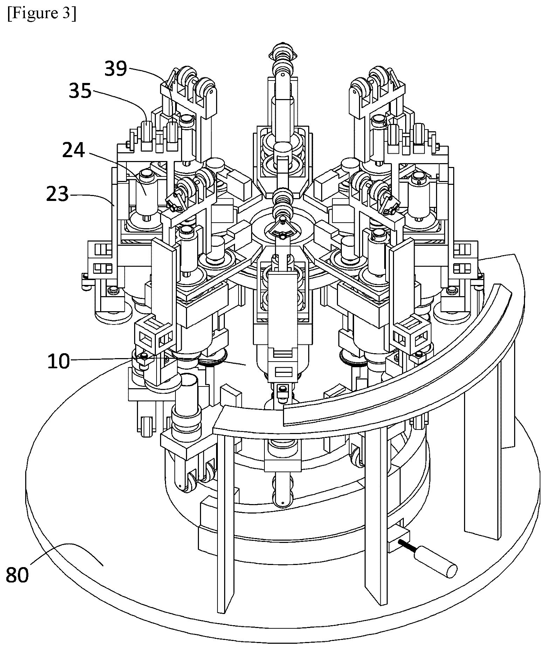

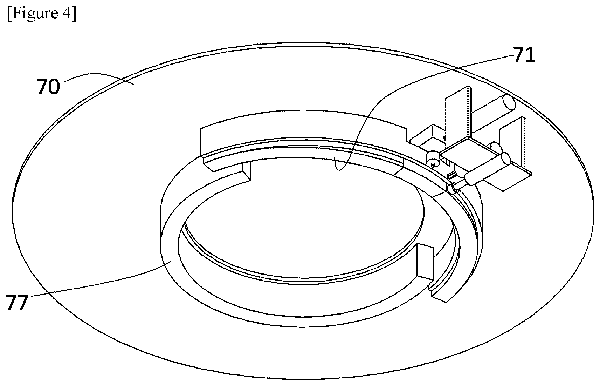

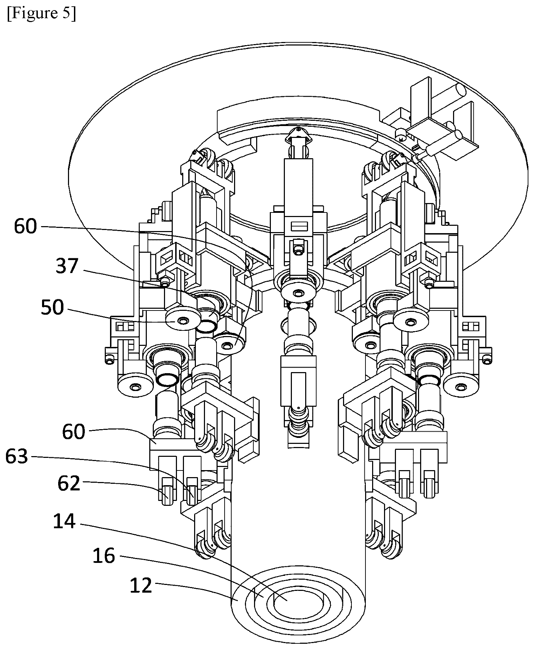

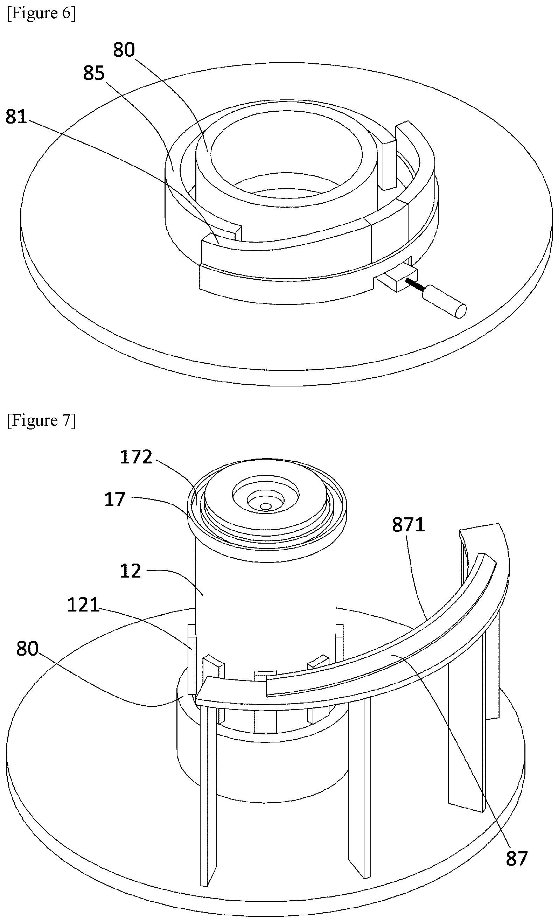

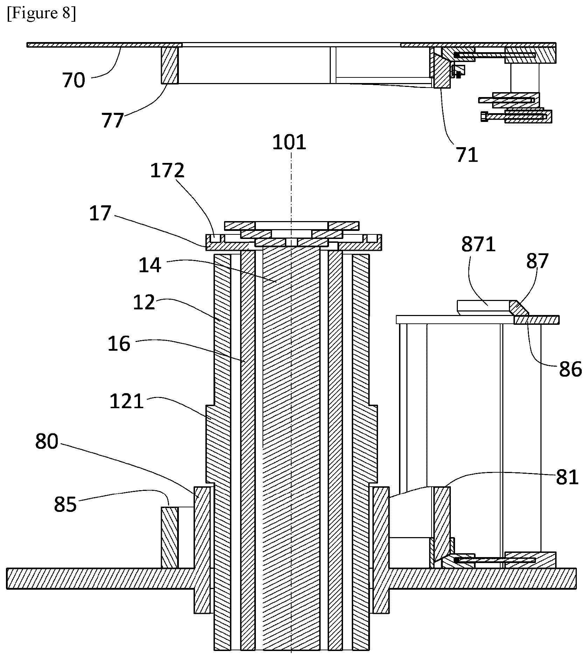

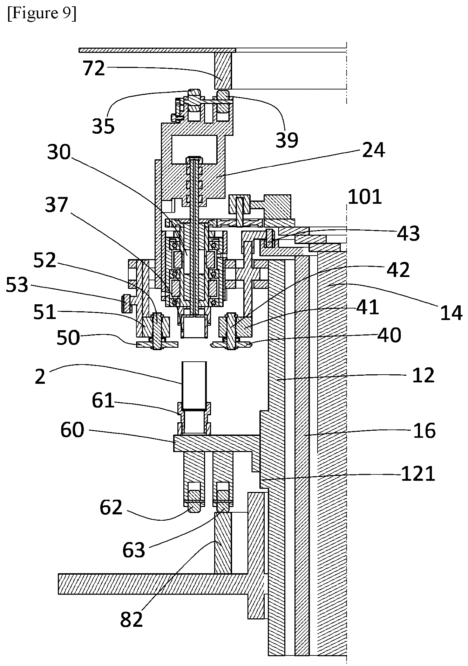

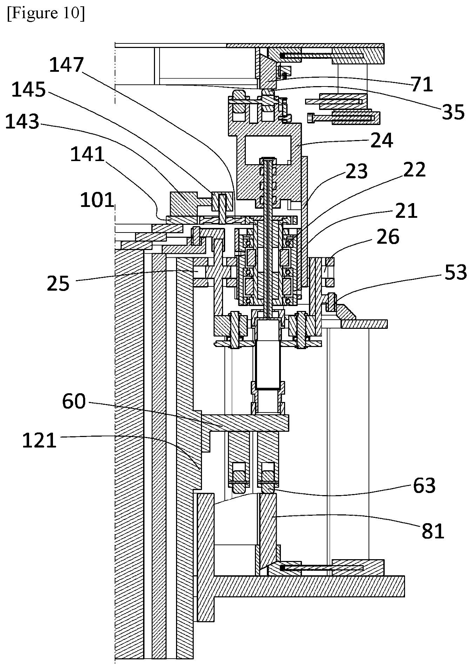

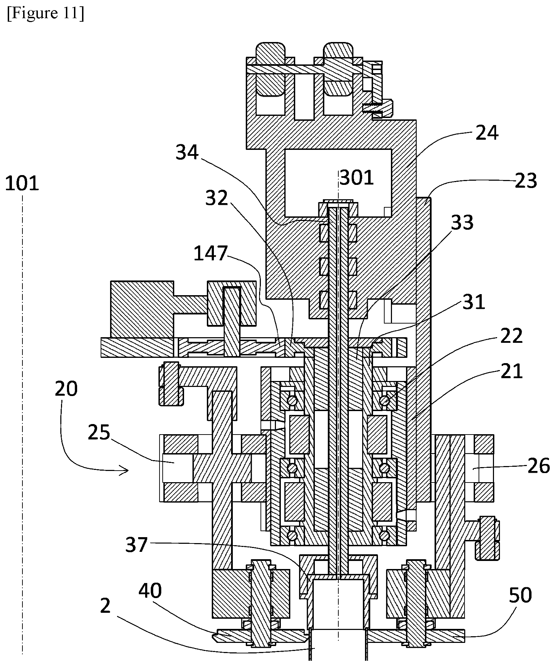

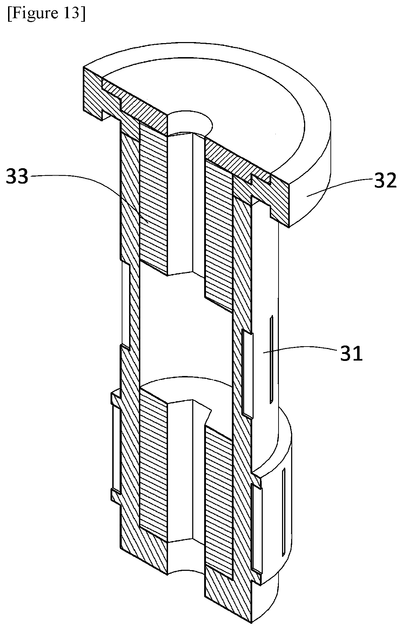

With reference to FIGS. 1 to 13, the overall structure will be described. The rotary can beading apparatus 1 includes the rotary 10 that rotates about the center axis 101.

The rotary 10 includes an outer rotary 12 and an inner rotary 14 that are concentric, and a support rotary 16 provided therebetween in radial direction. The outer rotary 12 and the inner rotary 14 may rotate at the same speed.

A lower frame 80 is installed around the lower portion of the rotary 10 to support the rotation of the rotary 10. The lower frame 80 and the support rotary 16 are firmly fixed so as to support the rotation of the outer rotary 12 and the inner rotary 14.

The rotary can beading apparatus 1 includes a plurality of arms 20 extending in radial direction and arranged along the circumference of the rotary 10 and so as to rotate together with the rotary 10. According to the embodiment, eight arms 20 installed at the outer rotary 12 at equal intervals along the circumferential direction are exemplified.

A spindle support 21 is provided at the arm 20. The spindle support 21 rotatably supports the spindle 30 through a bearing 22. The spindle 30 is rotatably installed at the spindle support 21 around the rotary axis 301.

The spindle 30 includes a cylindrical housing 31 extending vertically, a sleeve 33 inserted in the housing 31, and a shaft 34 extending vertically and inserted in the sleeve 33.

The housing 31 and the sleeve 33 are fixed as a single body to rotate together. The shaft 34 is rotationally constrained to the sleeve 33 and rotates together with the sleeve 33. The shaft 34 is inserted to be axially slidable relative to the sleeve 33. According to the embodiment, the shaft 34 having a substantially regular hexagonal cross-section and the sleeve 33 provided with a hole corresponding to the shape of the shaft 34 exemplified, which allows the shaft 34 and the sleeve 33 to be mutually rotationally constrained while enabling the shaft 34 to be axially slidable.

A head 37 is connected to the lower end portion of the shaft 34. The head 37 is connected to the shaft 34 to rotate and move up and down together with the shaft 34. The head 37 supports the open end provided at the upper end portion of the sidewall member of the can 2, transmits rotational force to the can 2, and rotates together with the can 2.

An upper frame 70 is provided above the rotary 10. The upper frame 70 is firmly fixed. An upper rail cam 71 having a head height profile extending in circumferential direction with respect to the center axis 101 of the rotary 10 is installed under the upper frame 70.

A shaft support member 24 is installed at the upper end portion of the shaft 34 to rotatably support the shaft 34 while constraining the shaft 34 in axial direction of the shaft 34.

A shaft lifting guide 23 is installed at the arm 20 to guide and support the lifting of the shaft support member 24. The shaft support member 24 may be moved up and down along the shaft lifting guide 23, and accordingly, the shaft 34 may also be moved up and down together.

At the upper portion of the shaft support member 24, a head cam follower 35 is installed to be moved up and down together with the shaft 34 of the spindle 30. The head cam follower 35 revolves around the center axis 101 of the rotary 10 and follows the head height profile, and accordingly, the shaft 34 and the head 37 connected to the lower end portion of the shaft 34 are moved up and down together.

An upper rail 77 extending in circumferential direction with respect to the center axis 101 is further installed under the upper frame 70. In addition, a head roller 39 moving up and down together with the shaft 34 of the spindle 30 and following the upper rail 77 is further installed above the shaft support member 24.

The upper rail 77 and the upper rail cam 71 are provided at radially different positions of the center axis 101. According to the embodiment, the upper rail 77 disposed radially inner than the upper rail cam 71 is exemplified.

Similarly, the head roller 39 and the head cam follower 35 are provided at radially different positions of the center axis 101. According to the embodiment, the head roller 39 disposed radially inner than the head cam follower 35 is exemplified.

In the head lift section along circumferential direction, the height of the head 37 is determined by the upper rail cam 71, and in the head travel section that does not overlap with the head lift section along circumferential direction, the height of the head 37 is determined by the upper rail 77.

For example, in the head lift section, the head cam follower 35 is in contact with the upper rail cam 71 and reflects the head height profile to the height of the head 37, and in the head travel section, the head roller 39 is in contact with the upper rail 77 and maintains the height of the head 37 constant.

The rotary can beading apparatus 1 includes a plurality of can tables 60 extending in radial direction and arranged along the circumference of the rotary 10 and so as to rotate together with the rotary 10. According to the embodiment, eight can tables 60 installed at the outer rotary 12 at equal intervals along the circumferential direction are exemplified.

The outer circumference of the outer rotary 12 is provided with a table lifting guide 121 extending vertically, and the eight can tables 60 are guided to move up and down along the table lifting guide 121.

A can support 61 is provided at the radial edge of the can table 60 so as to rotate with the can table 60 about the center axis 101.

The can support 61 is aligned with the head 37 vertically. The can support 61 is installed to freely rotate with respect to the can table 60 about the rotary axis 301 of the head 37. The can support 61 rotates in response to the rotational force of the head 37.

A lower rail cam 81 is installed at the lower frame 80. The lower rail cam 81 has a can height profile that extends in circumferential direction with respect to the center axis 101 of the rotary 10.

A can cam follower 62 moving up and down together with the can table 60 is installed under the can table 60. The can cam follower 62 revolves around the center axis 101 of the rotary 10 and follows the can height profile, and accordingly, the can table 60 moved up and down together, thereby adjusting the height of the can support 61.

A lower rail 85 extending in circumferential direction with respect to the center axis 101 is further installed at the lower frame 80. In addition, a can roller 63 moving up and down together with the can table 60 and following the lower rail 85 is further installed under the can table 60.

The lower rail 85 and the lower rail cam 81 are provided at radially different positions of the center axis 101. According to the embodiment, the lower rail 85 disposed radially inner than the lower rail cam 81 is exemplified.

Similarly, the can roller 63 and the can cam follower 62 are provided at radially different positions of the center axis 101. According to the embodiment, the can roller 63 disposed radially inner than the can cam follower 62 is exemplified.

In the can lifting section along circumferential direction, the height of the can table 60 may be determined by the lower rail cam 81, and in the can travel section that does not overlap with the can lifting section along circumferential direction, the height of the can table 60 is determined by the upper rail 77.

For example, in the can lifting section, the can cam follower 62 is in contact with the lower rail cam 81 and reflects the can height profile to the height of the can support 61, and in the can travel section, the can roller 63 is in contact with the lower rail 85 and maintains the height of the can support 61 constant.

The rotary can beading apparatus 1 includes a beading knife 40 installed at each of the arms 20.

The beading knife 40 is rotatably supported by a knife support axis 42 installed at the knife support 41. The beading knife 40 is extrapolated to the knife support axis 42 so that relative movement in axial direction is constrained while relative rotation is allowed with respect to the knife support axis 42.

The arm 20 supports the knife support 41 so that the knife support 41 may move toward or away from the rotary axis 301 of the head 37. According to the embodiment, the knife movement guide 25 provided at the arm 20 supporting the knife support 41 to slide in radial direction of the rotary axis 301 is exemplified. The knife movement guide 25 is provided at the arm 20 inner than the spindle support 21 in radial direction of the center axis 101.

A knife rail cam 17 having a knife radial position profile 172 and extending in circumferential direction with respect to the center axis 101 is installed above the support rotary 16. For example, the knife radial position profile 172 may have a trajectory of a circle eccentrically arranged with respect to the center axis 101.

The knife movement guide 25 is provided at the arm 20 outer than the knife rail cam 17 in radial direction of the center axis 101.

A knife cam follower 43 moving in radial direction with respect to the rotary axis 301 together with the beading knife 40 and following the knife radial position profile 172 for adjusting the radial distance of the beading knife 40 with respect to the rotary axis 301 of the spindle 30 is installed at the knife support 41.

The rotary can beading apparatus 1 includes a support roller 50 installed at each of the arms 20 to face the beading knife 40 with the rotary axis 301 therebetween.

The support roller 50 is rotatably supported by a roller support axis 52 installed at the roller support 51. The support roller 50 is extrapolated to the roller support axis 52 so that relative movement in axial direction with respect to the roller support axis 52 is constrained while relative rotation is allowed.

The arm 20 supports the roller support 51 so that the roller support 51 may move toward or away from the rotary axis 301 of the head 37. According to the embodiment, the arm 20 provided with a roller movement guide 26 supporting the roller support 51 allowing the roller support 51 to slide in radial direction of the rotary axis 301 is exemplified. The roller movement guide 26 is provided at the arm 20 outer than the spindle support 21 in radial direction of the center axis 101. For reference, the shaft lifting guide 23 is provided between the spindle support 21 and the roller movement guide 26 in radial direction.

The lower frame 80 is provided with a middle table 86 extending to a height equal to the head 37 at a position outer than the head 37 with respect to the center axis 101.

A support rail cam 87 having a support roller radial position profile 871 extending in circumferential direction with respect to the center axis 101 is installed on the middle table 86. For example, the support roller radial position profile 871 may have an arc-shaped trajectory eccentrically arranged with respect to the center axis 101.

The roller movement guide 26 is provided at the arm 20 inner than the support rail cam 87 in radial direction of the center axis 101.

A support cam follower 53 moving in radial direction with respect to the rotary axis 301 together with the support roller 50 and following the support roller radial position profile 871 to adjust the radial distance of the support roller 50 with respect to the rotary axis 301 of the spindle 30 is installed at the roller support 51.

The rotary can beading apparatus 1 includes a plurality of spindle drive supports 141 extending in radial direction and arranged along the circumference of the rotary 10 to rotate together with the rotary 10. According to the embodiment, eight spindle drive supports 141 installed above the inner rotary 14 at equal intervals along the circumferential direction are exemplified. The spindle drive support 141 is aligned with the arm 20 in radial direction of the center axis 101.

A spindle drive 143 is installed on the spindle drive support 141. The spindle drive 143 is disposed radially inner than the spindle 30 with respect to the center axis 101.

The spindle drive 143 includes: a drive motor 145 generating a rotational force; and a drive gear 147 rotated by the drive motor 145. The rotation axis of the drive gear 147 is arranged parallel to the rotation axis of the spindle 30. A driven gear 32 engaged with the drive gear 147 is provided on the housing 31 of the spindle 30 to rotate together with the housing 31. The spindle drive 143 rotates the spindle 30 in a section where rotation of the spindle 30 is required in circumferential direction of the rotary 10.

The spindle 30 includes a case 300 fixedly installed at the spindle support 21. The case 300 is cylindrical and provided with a first hollow portion 302 with open upper end. The first hollow portion 302 extends axially.

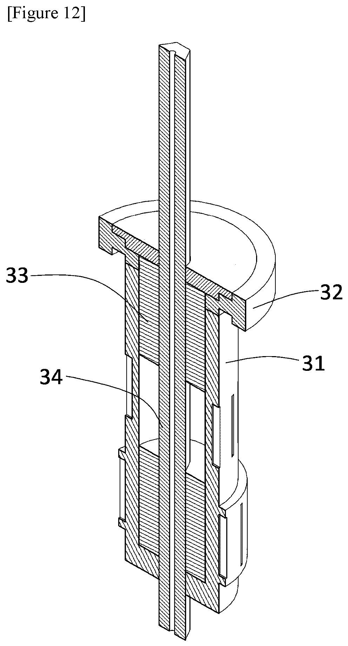

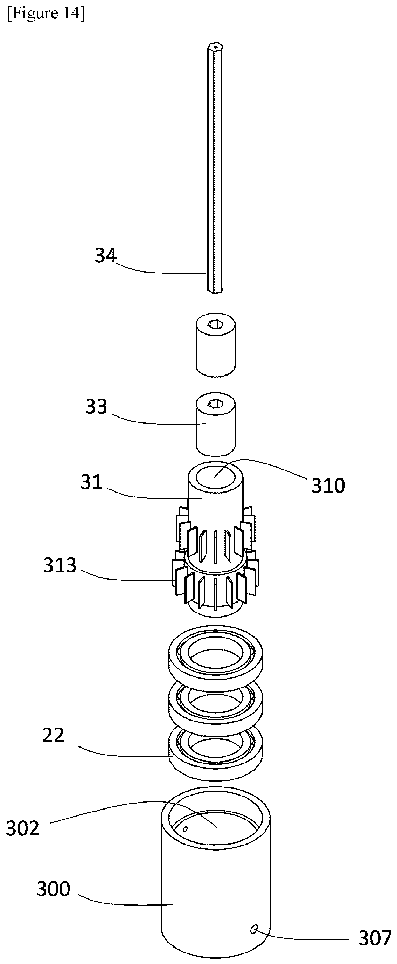

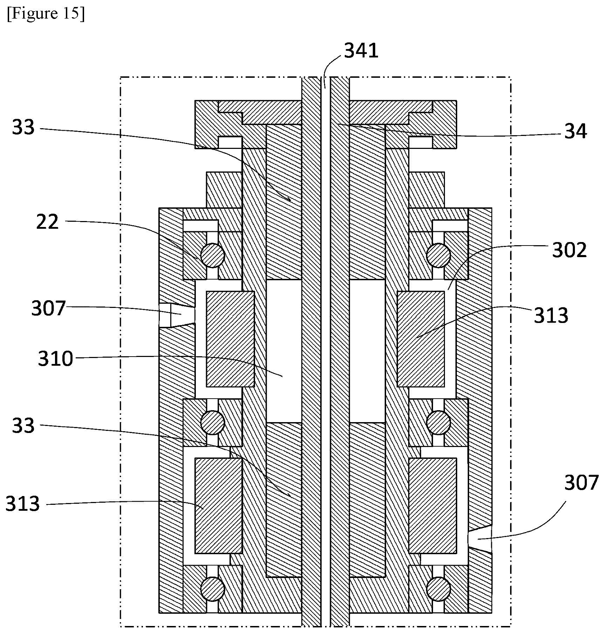

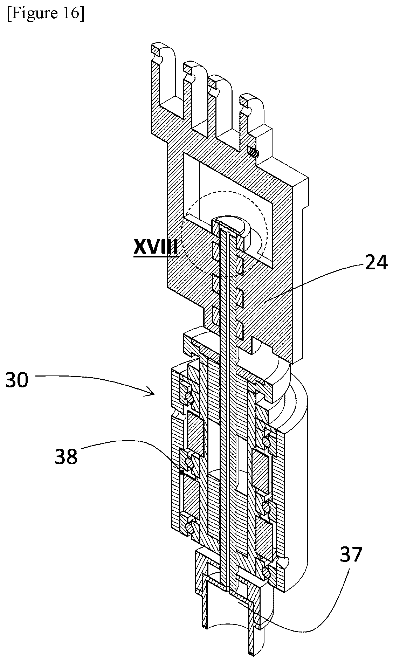

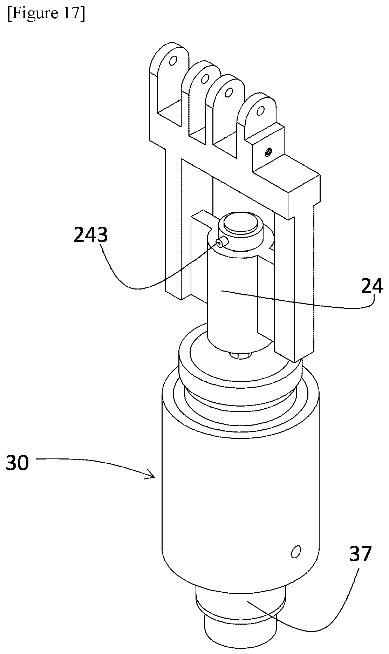

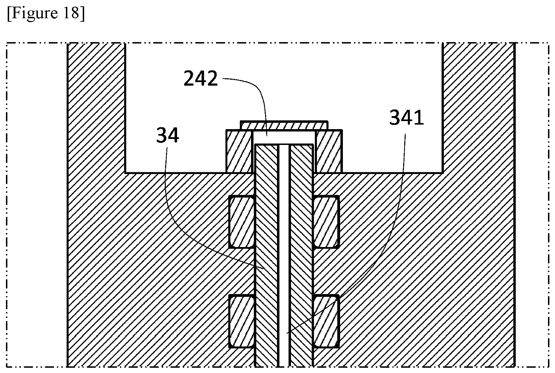

Referring to FIGS. 12 to 18, the housing 31 is rotatably accommodated in the first hollow portion 302 with respect to the case 300. The outer diameter of the housing 31 is smaller than the inner diameter of the case 300. The housing 31 has a second hollow portion 310 extending axially.

The sleeve 33 is press-fitted into the second hollow portion 310 of the housing 31 as a single body. That is, the housing 31 and the sleeve 33 are axially and mutually constrained and circumferentially and mutually constrained. A pair of sleeves 33 are disposed at the upper and lower end portions of the second hollow portion 310, respectively.

The shaft 34 is installed to be rotationally constrained to the sleeve 33 while being axially slidable with respect to the sleeve 33. Accordingly, the shaft 34 axially extends across the second hollow portion 310 to be rotationally constrained to the housing 31 but axially slidable with respect to the housing 31.

Between the case 300 and the housing 31, a bearing 22 is interposed to support the rotation of the housing 31 with respect to the case 300.

The bearing 22 is accommodated in the first hollow portion 302.

The bearing 22 is disposed between the case 300 and the housing 31 to support the case 300 radially.

The bearing 22 may be accommodated in the first hollow portion 302 with the outer circumference thereof in contact with the inner circumference of the case 300 and the inner circumference thereof in contact with the outer circumference of the housing 31.

A plurality of bearings 22 may be provided axially spaced apart from each other. According to the embodiment, three bearings 22 spaced apart from one another are exemplified.

Fan blades 313 are installed on the outer circumferential surface of the housing 31. The fan blades 313 are spaced apart along the circumferential direction of the housing 31.

The fan blades 313 protrude radially outward from the outer circumferential surface of the housing 31 and extend vertically. Accordingly, the surfaces of the fan blades 313 may have a normal line directed toward the circumferential direction.

The fan blades 313 are disposed in the first hollow portion 302 with the housing 31 accommodated in the case 300.

The fan blades 313 are arranged between two adjacent bearings in axial direction. According to the embodiment, the fan blades 313 annularly arranged in the upper and lower portions among three bearings are exemplified.

When the housing 31 rotates with respect to the case 300, the fan blades 313 rotate in the annular space between the housing 31 and the case 300 to generate a large airflow, and the resulting airflow quickly absorbs the heat of the surface of the housing 31. Accordingly, air flows in the internal gap of the spindle 30, and high-temperature air may be quickly discharged to the outside.

Meanwhile, at least one through-hole 307 is provided in the case 300. The through-hole 307 serves as a passage communicating the first hollow portion 302 of the case 300 to the outside thereof. According to the embodiment, the through-holes 307 provided at the upper and lower portions of the side wall of the case 300, respectively, are exemplified. The through-hole 307 is provided in the case 300 between two axially adjacent bearings 22.

The through-hole 307 at the lower portion communicates with the space at the lower portion where the fan blades 313 are installed, and the through-hole 307 at the upper portion communicates with the space at the upper portion where the fan blades 313 are installed.

Through the through-hole 307, suction may be performed to discharge air in the first hollow portion 302 out of the first hollow portion 302, or blowing may be performed to introduce external air into the first hollow portion 302. When there are two or more through-holes 307, suction may be performed for some through-hole 307, and blowing may be performed for some through-hole 307.

When the air in the first hollow portion 302 is discharged out of the first hollow portion 302 through the through-hole 307, high temperature air in the first hollow portion 302 is suctioned out, air flow occurs in the internal gap of the spindle 30, and low temperature air may be introduced into the spindle 30 and fill the first hollow portion 302.

When external air is introduced into the first hollow portion 302 through the through-hole 307, air flow occurs in the internal gap of the spindle 30, and high temperature air may be quickly discharged to the outside.

Meanwhile, the shaft 34 has a hollow structure. That is, a shaft hole 341 extending through the shaft 34 along axial direction may be provided in the center of the shaft 34. The shaft 34 is perforated by the shaft hole 341 in axial direction.

When gas is forced to flow through the shaft hole 341, the shaft 34 may be directly and quickly cooled.

The forced gas flow structure may be embodied in the shaft support member 24 that rotatably supports the upper end portion of the shaft 34.

In order to achieve this, the shaft support member 24 includes a chamber 242 where the upper end portion of the shaft 34 is exposed. The upper end portion of the shaft hole 341 is exposed so as to communicate with the chamber 242.

In addition, in order to communicate with the chamber 242, a suction hole 243 is installed in the shaft support member 24. When the gas in the chamber 242 is suctioned out of or external air is supplied into the chamber 242 through the suction hole, the supplied air flows in axial direction along the shaft hole 341 and cools the shaft 34.

The cooling operation using the forced airflow as described above may be controlled by measuring the temperature of the shaft 34 with a temperature sensor 38.

The temperature sensor 38 may be installed in the first hollow portion 302 outside the housing. The temperature sensor 38 monitors the temperature of the shaft 34. In addition, the cooling control is performed based on the temperature measured by the temperature sensor 38. For example, when the temperature measured by the temperature sensor is equal to or higher than the reference temperature, stronger cooling operation of the shaft 34 may be performed.

For example, when the temperature measured by the temperature sensor 38 is equal to or higher than the reference temperature, the suction or supply pressure applied to the suction hole 243 may be increased, and the suction or supply pressure applied to the through-hole 307 may be increased.

Accordingly, cooling of the shaft 34 may be performed efficiently and reliably.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A rotary can beading apparatus, comprising:
a rotary rotating about a center axis;
a plurality of arms arranged along a circumference of the rotary and extending in a radial direction, the plurality of arms rotating with the rotary;
a spindle rotatably installed about a rotary axis at each of the plurality of arms; and
a head rotating by a rotational force received from the spindle,
wherein the spindle comprises:
a case provided with a first hollow portion extending axially;
a housing accommodated in the first hollow portion to be rotatable with respect to the case, the housing provided with a second hollow portion extending axially and having a smaller diameter than the case;
a shaft extending axially across the second hollow portion to be axially slidable with respect to the housing while being rotatably constrained to the housing and having an axial end connected to the head; and
a plurality of fan blades protruding radially outward from an outer circumferential surface of the housing and extending in a vertical direction, the plurality of fan blades disposed to be spaced apart along a circumferential direction,
wherein the plurality of fan blades are arranged in the first hollow portion with the housing is accommodated in the case.

2. The rotary can beading apparatus of claim 1, wherein surfaces of the plurality of fan blades have a normal in the circumferential direction.

3. The rotary can beading apparatus of claim 1, further comprising: a plurality of bearings interposed between the case and the housing and supporting a rotation of the housing with respect to the case,
wherein the plurality of bearings are arranged between the case and the housing in the radial direction and axially spaced apart from each other, and
wherein the plurality of fan blades are disposed between two adjacent bearings in an axial direction.

4. The rotary can beading apparatus of claim 1, wherein a through-hole communicating with a space of the first hollow portion where the plurality of fan blades are disposed is provided in the case.

5. The rotary can beading apparatus of claim 4, wherein a gas in the first hollow portion is suctioned to outside through the through-hole.

6. A rotary can beading apparatus, comprising:
a rotary rotating about a center axis;
a plurality of arms arranged along a circumference of the rotary and extending in a radial direction, the plurality of arms rotating with the rotary;
a spindle rotatably installed about a rotary axis at each of the plurality of arms; and
a head rotating by a rotational force received from the spindle,
wherein the spindle comprises:
a case provided with a first hollow portion extending axially;
a housing accommodated in the first hollow portion to be rotatable with respect to the case, the housing provided with a second hollow portion extending axially and having a smaller diameter than the case;
a shaft extending axially across the second hollow portion to be axially slidable with respect to the housing while being rotatably constrained to the housing and having an axial end connected to the head; and
a through-hole provided in the case to communicate with a space of the first hollow portion which is outside the housing,
wherein a gas in the first hollow portion is suctioned to outside through the through-hole.

7. The rotary can beading apparatus of claim 6, further comprising: a plurality of bearings interposed between the case and the housing and supporting a rotation of the housing with respect to the case,
wherein the plurality of bearings are arranged between the case and the housing in the radial direction and axially spaced apart from each other, and
the through-hole is provided in the case between two adjacent bearings in an axial direction.

8. The rotary can beading apparatus of claim 6, further comprising: a temperature sensor installed in the first hollow portion outside the housing.

9. The rotary can beading apparatus of claim 8, wherein a suction pressure is increased when an internal temperature measured by the temperature sensor is equal to or higher than an upper limit reference temperature.

10. The rotary can beading apparatus of claim 6, further comprising:
a shaft hole provided at a center of the shaft and extending in an axial direction; and
a forced flow unit forcing cooling gas to flow through the shaft hole.

11. A rotary can beading apparatus, comprising:
a rotary rotating about a center axis;
a plurality of arms arranged along a circumference of the rotary and extending in radial direction, the plurality of arms rotating with the rotary;
a spindle rotatably installed about a rotary axis at each of the plurality of arms; and
a head rotating by a rotational force received from the spindle,
wherein the spindle comprises:
a case provided with a first hollow portion extending axially;
a housing accommodated in the first hollow portion to be rotatable with respect to the case, the housing provided with a second hollow portion extending axially and having a smaller diameter than the case;
a shaft extending axially across the second hollow portion to be axially slidable with respect to the housing while being rotatably constrained to the housing and having a first axial end connected to the head;
a shaft hole extending in a axial direction and provided at a center of the shaft; and
a forced flow unit forcing a gas to flow through the shaft hole.

12. The rotary can beading apparatus of claim 11, wherein the forced flow unit comprises:
a shaft support member rotatably supporting a second axial end of the shaft and having a chamber communicating with the shaft hole; and
a suction hole provided in the shaft support member to communicate with the chamber.

13. The rotary can beading apparatus of claim 12, further comprising: a temperature sensor installed in the first hollow portion outside the housing,
wherein a suction pressure is increased when an internal temperature measured by the temperature sensor is higher than an upper limit reference temperature.
